Europäisches Patentamt

(19) European Patent Office

Office européen des brevets

(11) Publication number : **0 333 299 B1**

(12) **EUROPEAN PATENT SPECIFICATION**

(45) Date of publication of patent specification :
**11.11.92 Bulletin 92/46**

(51) Int. Cl.⁵ : **E01C 11/16,** C04B 26/26,
// (C04B28/26, 14:38, 18:02)

(21) Application number : **89200678.4**

(22) Date of filing : **16.03.89**

(54) **Process for producing a composition to be used in road paving.**

(30) Priority : **18.03.88 NL 8800687**

(43) Date of publication of application :
**20.09.89 Bulletin 89/38**

(45) Publication of the grant of the patent :
**11.11.92 Bulletin 92/46**

(84) Designated Contracting States :
**AT BE CH DE ES FR GB IT LI LU NL**

(56) References cited :
**EP-A- 0 288 863**
**DE-C- 885 827**
**DE-C- 919 205**
**GB-A- 1 537 663**
**US-A- 2 893 889**
**US-A- 4 166 752**
**US-A- 4 613 376**

(73) Proprietor : **HOLLANDSCHE BETON GROEP N.V.**
**489, Generaal Spoorlaan**
**NL-2285 TA Rijswijk (NL)**

(72) Inventor : **Coppens, Martinus Hendrik Maria,**
**Smalle Streek 5,**
**NL-3871 BW Hoevelaken (NL)**

(74) Representative : **de Bruijn, Leendert C. et al**
**Nederlandsch Octrooibureau**
**Scheveningseweg 82 P.O. Box 29720**
**NL-2502 LS Den Haag (NL)**

## Description

The invention relates to a process for producing a composition to be used in a road paving, comprising mixing the mineral constituents gravel and/or crushed stone and sand with a bituminous binder in a mixer, adding in the mixer glass or mineral fibres in a percentage by mass of 0.2 - 0.8 with respect to the mineral constituents, the diameter of the fibres being at least 1 micrometer, and an adhesion-promoting protection coating being provided on the fibres.

Such a process is known from US-A-4613376.

Lorry traffic is increasing annually in many countries in the world; not only has the number of lorries increased, but also the average axle loading. Ever increasing requirements are therefore being imposed on the paving of asphalt roads. The conventional road paving compositions are often inadequate, that is to say known paving layers composed of bitumen, sand and stone do not have the intended service life, with the result that a road paving constructed from such layers has to be replaced after a relatively short time. Attempts have been made to raise the strength characteristics to a higher level. Thus, it is known to add polymers to the bituminous binders in order to modify said binders. Moreover, sulphur is used to improve the binder system and the mineral structure. Further, it is known to use mica, silica fume and other substances in order to optimise the mechanical properties. These attempts do in fact have some result, but there is no question of an appreciable improvement in the strength characteristics. An increase in the splitting strength and the flexural tensile strength and in the fatigue life is of importance, in particular, in the case of porous road paving material. The trend is to use this material to an increasing extent in the top layer of an asphalt road in order to remove rain water quickly. This promotes road safety. The porosity is achieved by using relatively little bitumen and a large amount of stone. This has a disadvantageous effect on the strength.

In the process disclosed in US-A-4613376 the glass fibres added in the mixer are loose mineral fibres of indefinite length. It has appeared that the mixing of such loose fibres is poor, which leads to a very irregular reinforcement and even to a local weakening of the road paving.

The object of the invention is to avoid this disadvantage and to provide a process described in the introduction by which the strength characteristics of asphalt layers are appreciably improved uniformelly across the entire road paving.

According to the invention the fibres are in the form of bundles of more than 100 fibres, and chopped to a certain length between 5 and 50 mm

The material of the fibres must be resistant to a temperature up to 250°C. Plastic fibres are therefore not suitable. It is moreover of importance that the fibre bundles are loose and have not been woven, for example, into a mat or the like. The bundles comprise more than 100 filaments. An unduly high fibre content in the composition results in conglomeration and with unduly few fibres no reinforcement or virtually no reinforcement is achieved.

Unduly long fibres result in inadequate mixability. On the other hand, with unduly short fibre pieces, entanglement occurs. The length of the filaments will therefore be between 5 and 50 mm, preferably between 5 and 30 mm.

GB-A-1537663 discloses a method of modifying the physical properties of a water hardenable composition by adding to the composition fibres and subjecting the mixture to a mixing operation. The fibres are obtained by cutting an impregnated long rope into short bundles.

For practicial reasons the cross section must not be unduly small. The minimum diameter of 1 micrometer is indicated. To provide the fibres with a mechanical protection and to promote adhesion to the bitumen in the composition, a protective coating which promotes the adhesion is provided on the fibres. Said coating may consist of chemically modified bitumen compositions. Examples are described, inter allea, in the US patent specifications 4166752 and 4251577.

As regards mechanical protection, the coating forms an envelope which protects against breakage, the fibres also being protected against rubbing along each other.

The addition of glass or mineral fibres has a reinforcing effect on all the common asphalt compositions for road paving.

Examples are:

|  | Crushed Stone | Gravel | Sand | Filler | Bitumen % |
|---|---|---|---|---|---|
| Dense asphaltic concrete | 50-65 |  | 30-45 | approx.8 | 6-8% by mass |
| Open asphaltic concrete | 60-75 |  | 20-35 | approx.6 | 4-6% by mass |
| Very open asphaltic concrete | 70-90 |  | 5-25 | approx.5 | 4-6% by mass |
| Gravel asphaltic concrete |  | 50-65 |  | approx.6 | 4-5% by mass |
| Gravel asphalt | 30-40 |  | 40-50 | approx.20 | 8-12% by mass |

The effect of adding chopped glass fibres will now be illustrated with reference to the following examples.

### Example 1

Dense asphaltic concrete having a maximum stone size of 16 mm composed of crushed pebble, crushed sand, fine sand, flyash lime filler, 6.4 % bitumen 80/100

|  | Without glass fibre | With 0.4% fibre | Increase |
|---|---|---|---|
| Splitting strength | 0.99 N/mm$^2$ | 1.20 N/mm$^2$ | 21 % |
| Flexural tensile strength | 2.9 N/mm$^2$ | 3.4 N/mm$^2$ | 17 % |

### Example 2

Dense asphaltic concrete having a maximum stone size of 16 mm composed of broken stone/gres d'yvoir, crushed moraine sand, fine sand, lime filler, 6.0 % bitumen 80/100.

|  | Without glass fibre | With 0.4% fibre | Increase |
|---|---|---|---|
| Splitting strength | 0.83 N/mm$^2$ | 1.02 N/mm$^2$ | 23 % |
| Flexural tensile strength | 2.7 N/mm$^2$ | 3.0 N/mm$^2$ | 11 % |
| Fatigue life with repetitive loading (20°C) | N = 125,900 | N = 354,800 | 180 % |

<u>Example 3</u>

Dense asphaltic concrete having a maximum stone size of 16 mm, composed of crushed moraine, crushed sand, fine sand, flyash filler, 6.4 % bitumen 80/100

| | Without glass fibre | With 0.2% fibre | Increase |
|---|---|---|---|
| Splitting strength | 0.96 N/mm² | 1.08 N/mm² | 13 % |

It was found that the favourable effects are independent of the nature of the crushed stone (crushed pebble, moraine, porphyry, diabase), of the crushed sand (crushed pebble, moraine), of the natural sand (river sand, shallows sand etc.), of the filler (powdered limestone, flyash, slaked lime) and of the bituminous binder (bitumen 45/60, 80/100 etc.).

In the above examples, the glass fibre monofilaments had a length of approximately 13 mm, the diameter was approximately 13 micrometers and the fibres were added in the form of chopped bundles of fibres. The fibres were covered with a coating which promoted the adhesion to bitumen and forms a mechanical protection for the fibres.

Moreover, testing showed that the adding of chopped bundles of glass or mineral fibres in accordance with the invention has a favourable effect on the fatigue characteristics of asphalt.

Figure 1 shows an arrangement for a fatigue test.

Figure 2 shows a graph which reproduces the result of the fatigue test.

Fatigue tests for asphalt have been described in the annual report for 1976 of the Rijkswegenlaboratorium van Rijkswaterstaat (State Road Laboratory of the State Department of Public Works) and in LWL handbook no. 4, 1977 issued by the Rijkswaterstaat.

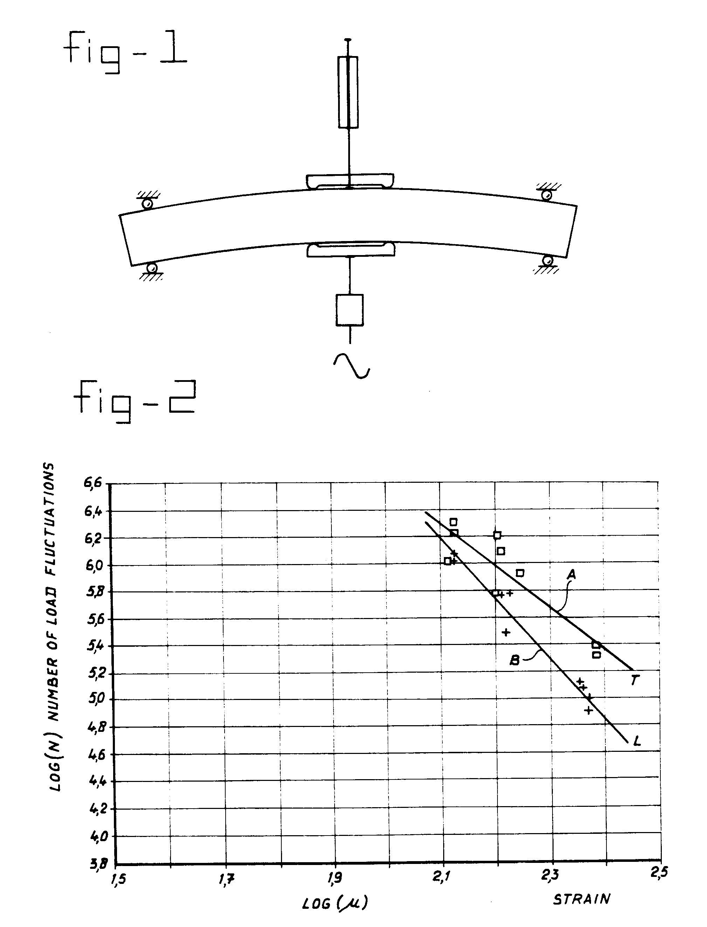

As Figure 1 shows, the fatigue tests are carried out with the aid of a four-point test arrangement in which an asphalt beam measuring 40 x 40 x 450 mm and clamped at four points is subjected to a sinusoidally varying load by means of a drive rod which is connected to a vibrator. The distance between the outermost support points is 400 mm and that between the two innermost support points is 130 mm. The frequency of the sinusoidal bending is 30 Hz and the bending has a constant amplitude. During the test, the force and the amount of bending are continuously measured as a function of the number of loadings. The tests can be carried out at various temperatures. The measurements appertaining to the values reproduced in the graph in Figure 2 have been carried out at 20°C. In Figure 2, the x axis represents the logarithm of the elongation in the outside of the asphalt beam and the y axis represents the logarithm of the number of loading cycles. The line A relates to a fibre-reinforced asphalt and the line B refers to an asphalt not reinforced with fibres.

Fatigue testing at constant force amplitude or constant elongation amplitude respectively corresponds best to the practical behaviour in the case where the asphalt layers in a road make the greatest or smallest contribution respectively to the total strength. On the basis of the fatigue behaviour measured in the laboratory, it is possible to determine the relative service life of different compositions in practice for dimensioning purposes.

## Claims

1. Process for producing a composition to be used in a road paving, comprising mixing the mineral constituents gravel and/or crushed stone and sand with a bituminous binder in a mixer, adding in the mixer glass or mineral fibres in a percentage by mass of 0.2 - 0.8 with respect to the mineral constituents, the diameter of the fibres being at least 1 micrometer, and an adhesion-promoting protection coating being provided on the fibres, characterised in that the fibres are in the form of bundles of more than 100 fibres and chopped to a certain length between 5 and 50 mm.

2. Process according to claim 1, characterised in that the length of the fibres is between 5 and 30 mm.

3. Process according to claim 1 or 2, characterised in that the coating is composed of chemically modified bitumen compositions.

**Patentansprüche**

1.    Verfahren zur Herstellung einer für Straßendecken anzuwendenden Zusammensetzung, wonach Mineralbestandteile Kies und/oder Bruchstein und Sand mit einem bituminösen Bindemittel in einer Mischvorrichtung gemischt werden und in der Mischvorrichtung Glasfasern oder Mineralfasern in einem Massen- oder Gewichtsprozentsatz von 0,2 bis 0,8 gegenüber den Mineralbestandteilen hinzugefügt werden, wobei der Durchmesser der Fasern wenigstens ein Mikrometer beträgt und wobei ein die Adhäsion fördernder Schutzüberzug auf den Fasern vorgesehen wird, dadurch gekennzeichnet, daß die Fasern in die Form von Bündel von mehr als 100 Fasern gebracht werden und auf eine bestimmte Länge zwischen 5 und 50 mm zerhackt werden.

2.    Verfahren nach Anspruch 1, dadurch gekennzeichnet, daß die Länge der Fasern zwischen 5 und 30 mm liegt.

3.    Verfahren nach Anspruch 1 oder 2, dadurch gekennzeichnet, daß der Überzug zusammengesetzt ist aus chemisch modifizierten Bitumen-Zusammensetzungen.

**Revendications**

1.    Procédé de fabrication d'une composition à utiliser pour un revêtement routier, comprenant les étapes consistant à mélanger les constituants minéraux, gravier et/ou pierre concassée et sable, avec un liant bitumeux, dans un mélangeur, à ajouter dans le mélangeur des fibres de verre ou minérales en un pourcentage en masse de 0,2 à 0,8 par rapport aux constituants minéraux, le diamètre des fibres étant d'au moins 1 micromètre, et les fibres étant recouvertes d'un revêtement de protection améliorant d'adhérence, caractérisé en ce que les fibres sont sous la forme de paquets de plus de 100 fibres et sont hachées à une longueur donnée comprise entre 5 et 50 mm.

2.    Procédé selon la revendication 1, caractérisé en ce que la longueur des fibres est comprise entre 5 et 30 mm.

3.    Procédé selon la revendication 1 ou 2, caractérisé en ce que le revêtement est composé de compositions de bitume modifié chimiquement.

fig-1

fig-2